# EUROPEAN PATENT SPECIFICATION

(11) **EP 3 216 507 B1**
(45) Date of publication and mention of the grant of the patent: **18.01.2023**
(21) Application number: 17159766.9
(22) Date of filing: 08.03.2017
(51) Int. Cl.: B01D 35/16, B01D 29/44, B01D 29/60, B01D 29/64, B01D 29/66, B01D 29/86, B01D 29/88

(54) **METHOD AND DEVICE FOR IMPROVED PREFILTRATION**
VERFAHREN UND VORRICHTUNG FÜR VERBESSERTE VORFILTRATION
PROCÉDÉ ET DISPOSITIF DE PRÉFILTRATION AMÉLIORÉE

(30) Priority: 09.03.2016 IT UA20161501
(43) Date of publication of application: 13.09.2017
(73) Proprietor: Della Toffola S.p.A., 31040 Signoressa di Trevignano (TV) (IT)
(72) Inventor: DELLA TOFFOLA, Giacomo, 31044 Montebelluna (IT); BONOTTO, Amedeo, 31028 Vazzola (IT)
(74) Representative: Marri, Luca

(56) References cited:
- WO-A2-2012/004649
- GB-A- 1 535 062
- US-A- 2 720 314
- US-A- 3 249 438
- US-A- 4 026 806
- US-A- 4 436 633
- US-A1- 2009 277 847
- US-A1- 2009 314 695
- US-A1- 2014 263 106
- US-A1- 2015 298 035

## Description

The present invention relates to an improved prefiltering method, particularly for separating coarse solids from a liquid phase which contains them, as well a device which uses such method.

In traditional filtering systems, before the step of filtering proper, usually of the tangential type, in which the finer solid particles are separated from the liquid phase, a preliminary step of prefiltering is usually envisaged, in which the coarser solids, i.e. those having size from substantially 0.5 mm to a few centimeters, are separated from the product to be filtered.

Traditional prefilters comprise a filtering bowl housing, inside a filtering cylinder with perforated side wall. In particular, the product to be filtered is introduced under pressure into the filtering cylinder, in which the solid particles of the product which are larger in size than the filtering cylinder holes stop, while the liquid fraction and the finer solid particles cross the filtering side wall, enter into the gap defined between this and the side wall of the bowl, and from here are pushed onto the bottom of the gap itself from where they are extracted outwards, to be sent to the successive steps of tangential filtering or centrifuging.

Generally, the prefilters are provided with revolving blades, which are supported by a revolving shaft, mounted centrally in the filtering cylinder. In particular, these blades remain substantially adherent to the perforated wall of the revolving cylinder and continuously remove the solid material retained thereby.

However, if the solid particles removed by the blades do not have a sufficient specific weight, they are pushed back towards the walls of the cylinder immediately after the passage of the blades. So, in this manner, the particles accumulate and form a major layer of solid which can occupy the entire zone inside the cylinder, thus causing a sudden and irremediable obstruction of the prefilter.

Furthermore, in traditional prefilters, it is not possible to determine when they are obstructed in satisfactory, accurate and reliable manner. Indeed, although there are solutions in which the opening of the discharge valves is controlled on the basis of the actual degree of obstruction of the prefilter, such parameter is not significant because the layer of solids which accumulates at the side filtering walls remains in all cases perfectly permeable despite its major thickness. Consequently, it is generally preferable to discharge the solids with a predetermined frequency on the basis of the consideration that the longer the product to be filtered remains inside the prefilter, the more likely is the creation of layers which reduce the efficacy of the prefilter itself.

Finally, when the discharge valve is opened in the traditional prefilters, the solid material retained by the filtering cylinder is thus packed to make its exit complicated and laborious.

GB1535062 describes a system for treating sludge from waste water purification stations. A filtering unit, consisting of a cylindrical body in which a perforated pipe with a filtering mesh is positioned, is envisaged in this system. In particular, the product to be filtered crosses the perforated pipe and, while the filtered liquid component crosses the filtering mesh and the perforated pipe, the unfiltered component is blocked in the pipe itself, forming on the inner wall thereof an annular solid layer, which is scraped and pushed towards the outlet by a revolving helical screw. The unfiltered product exits from the perforated pipe to be sent to an incinerator and, in order to limit the unfiltered product flow to be sent to the latter, a valve or volumetric pump, is provided at the filter outlet. Furthermore, in order to cause the advancement of the unfiltered component in the pipe, alternatively to the revolving helical spring, GB1535062 teaches the use of a recirculation pipe provided with a pump so that the unfiltered product is sent back in input to the pipe itself at a sufficiently high speed to allow the detachment of the annular solid layer which is formed on the perforated pipe wall.

US4436633 describes a filtering module comprising a compartment in which a plurality of filtering units formed by a perforated pipe enwrapped by a mesh are housed. The product to be filtered is sent under pressure, through the centrifugal pump, into said compartment so as to separate the filtrate, which by crossing the filtering units is thus collected and accumulated in the upper zone of the filtering module, from the more solid component which remains instead outside the filtering unit. So, when the solid component about the filtering unit reaches a considerable thickness or when the production of filtrate slows down, the interruption of the centrifugal pump is controlled to backwash the filtering units. In particular, the filtrate is put back in circulation so that, by running in sense opposite to the liquid to be filtered, it passes through the filtering units, thus causing the removal of solid deposits, which are accumulated on the surface of the filtering units and are then discharged, inevitably together with the filtrate used for backwashing, by opening the discharge valve on the bottom of the filtering module.

It is the object of the present invention to eliminate the drawbacks of the traditional solutions and to suggest a method which makes it possible to homogenize the product to be treated in the prefiltering device so as to discharge the solid fraction retained in it only when it is really needed.

It is another object of the invention to suggest a method and a device which envisage discharging the separated solid fraction before it becomes too packed, thus making the step of discharging and the step of cleaning of the device itself quicker and simpler.

It is another object of the invention to suggest a method and a device which makes it possible to automatically detect the approach to a situation of complete obstruction of the filtering elements.

It is another object of the invention to suggest a method and a device in which the cleaning of the prefilters is performed automatically without any intervention by the operator.

It is another object of the invention to suggest a method and a device which do not use or waste the previously filtered liquid for backwashing the filtering elements.

It is another object of the invention is to suggest a method and a device in which the separation of coarse solids is effective and complete.

It is another object of the invention is to suggest a method and a device which are simple and cost-effective.

It is another object of the invention to suggest a method and a device which display an alternative and/or improving characterization, in both construction and functional terms, with respect to the traditional ones.

All these objects, taken individually or in any combination thereof, and others which will be apparent from the following description, are achieved according to the invention by a method having the features indicated in claim 1 and a device having the features indicated in claim 6.

The present invention is further explained by means of a preferred embodiment given by way of nonlimiting practical example only with reference to the accompanying drawings, in which:

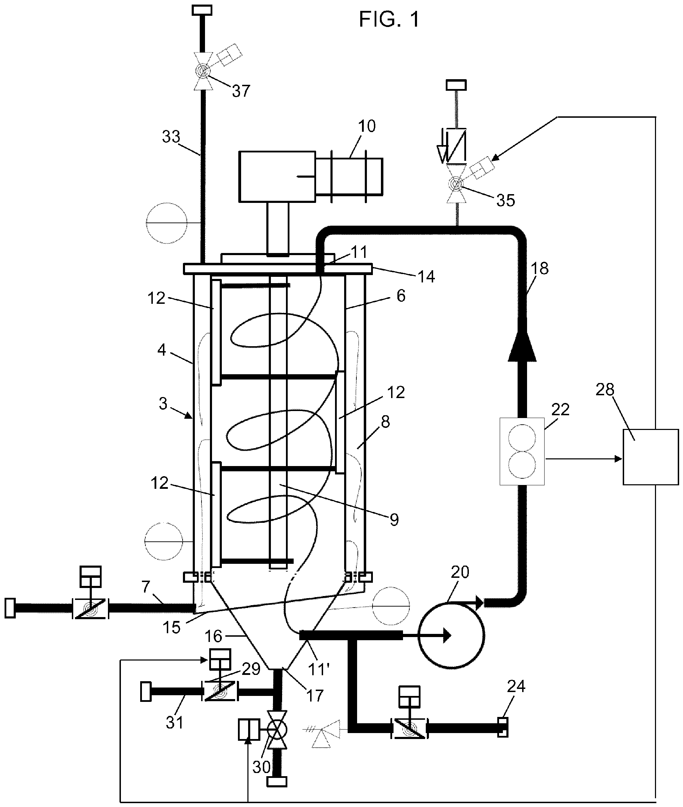

Figure 1 shows a simplified hydraulic diagram of the prefiltering device according to the invention,

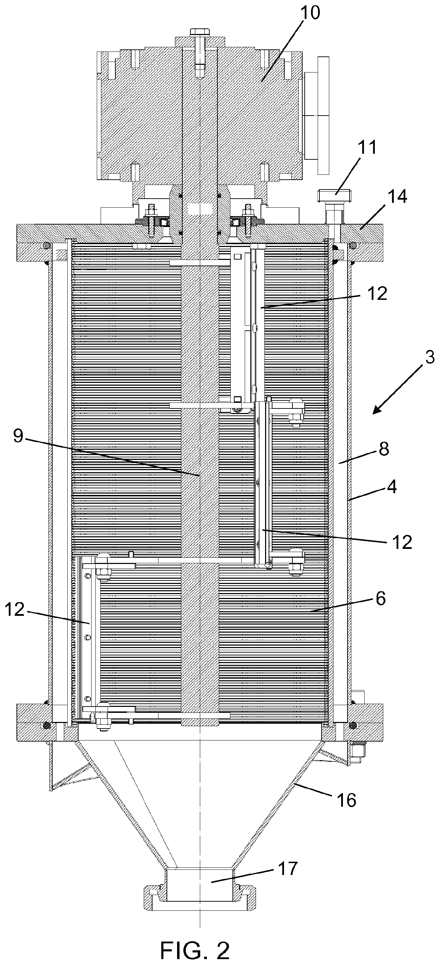

Figure 2 shows a vertical section view of the prefiltering device, and

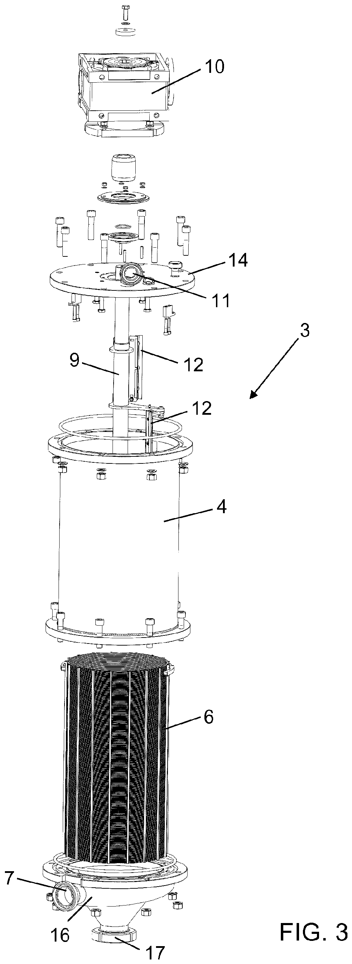

Figure 3 shows an exploded perspective view.

As shown in the figures, the prefiltering device according to the invention, indicated by reference numeral 2 as a whole, comprises a filtering module 3 which preferably has a vertical extension and is substantially of the traditional type.

In particular, it comprises a filtering bowl 4, having a vertical axis, in which a filtering element 6 is housed, advantageously consisting of a container having a substantially cylindrical development with the perforated side wall so at to allow the passage of the liquid fraction and of the finer solid fraction (filtrate or permeate), and to retain the coarser solid fraction (concentrate or retentate).

The gap 8 defined between the outer side surface of the filtering cylinder 6 and the inner side surface of the filtering bowl 4 defines the filtrate collection chamber, which then exits from the bottom of the filtering module 3 and, through an outlet pipe 7, is sent to the successive modules of the treatment system, such as, for example, a tangential filtering module or a centrifugation module.

A revolving shaft 9, mechanically coupled to an actuator 10, such as, for example, an electrical motor, is mounted centrally inside the filtering cylinder 6. Preferably, a plurality of blades 12 having longitudinal development, and i.e. developing parallel to the axis of the rotation shaft 9, are applied to the revolving shaft 9. Their free edge is in contact with the inner surface of the perforated side wall of the filtering cylinder 6. Appropriately, the revolving shaft 9 and the blades 12 create a pressure differential which pushes the product to be treated against the perforated inner wall of the filtering cylinder 6.

The filtering module 3 is closed on the top by a header 14 and on the bottom by an inclined bottom 15, through which the conical bottom 16, with non-perforated walls, of the filtering cylinder 6 extends downwards. This conical bottom 16 ends with a discharge pipe 17 of the solid fraction of the product to be treated/filtered which has not crossed the perforated side wall of the filtering cylinder 6.

An inlet mouth 11 in the filtering cylinder 6 of the product to be treated is applied to the upper header 14 of the filtering module 3, while an outlet mouth 11' of the retentate, i.e. of the product which has crossed the filtering cylinder 6 without having been filtered is applied to the lower conical bottom 16 of the filtering cylinder 6.

The mouths 11, 11' are connected to each other externally to the filtering module 3 by a recirculation circuit 18 of the retentate, to which a feeding pipe 24 of new product to be treated leads, which new product is introduced continuously to keep a predetermined flow rate or pressure downstream of the filter.

In particular, it is understood that hereinafter "product to be treated" which circulates in the circuit 18 and is introduced into the filtering modules 3 means both the retentate which has already crossed the filtering module 3 at least once and the new product which has never crossed the filtering module 3 which comes from the feeding circuit 24.

The recirculation circuit 18 is provided with a centrifugal pump 20, by means of which the product to be treated is circulated, and a sensor 22 (e.g. a flow meter) which detects the speed and/or flow rate of the product to be filtered in the recirculation circuit 18. According to the invention, the sensor 22 is positioned downstream of the centrifugal pump 20.

Necessarily, in the recirculation circuit 18, the pump 20 must be of centrifugal type because in such pump type the speed/flow rate of the fluid product exiting from it decreases as the concentration of the solid fraction of the fluid product increases. So, by detecting and monitoring the speed/flow rate of the fluid product to be treated downstream of the centrifugal pump 20 by means of the sensor 22, an indication can be obtained of the concentration of the solid fraction present in such product and, considering that such product has just crossed the filtering module 3, such indication is also representative of the obstruction level of the filtering element 6 of such module.

The sensor 22 is electronically connected to a control unit 28, implemented, for example, by means of a microcontroller, which receives the speed/flow rate value of the product to be filtered detected by the sensor 22 and is configured to compare such value with at least one predetermined speed/flow rate value.

Preferably, this predetermined speed/flow rate value corresponds to a concentration value which is substantially higher than the threshold value, under which there is an undesired obstruction in the filtering module 3 (i.e. a situation to be avoided). For example, this predetermined value corresponds to a concentration value of approximately 60% with respect to a nominal value, which is defined following the passage of water only at ambient temperature, and is appropriately chosen so as to be higher than a lower limit concentration which is equal, for example, to approximately 50% with respect to said nominal value. Appropriately, the lower limit value may correspond to a concentration which substantially represents a situation of total obstruction of the filtering element 6. Obviously, multiple predetermined values may be envisaged, set and/or selected by the user, and used as a function of the features of the product to be filtered.

A discharge valve 30 is envisaged, which may be of the on-off type or of the proportional type, at the discharge pipe 17 of the solid fraction separated from the product to be treated.

Advantageously, a circuit 31 for washing the filtering module 3 is also associated with the discharge pipe 17. In particular, the sending of the washing liquid in the filtering module 3 is controlled by a valve 29.

The control unit 28 is connected also to the discharge valve 30 and is configured to appropriately control the opening of the latter when the speed/flow rate value detected by the sensor 22 drops under the preset value which is stored in the unit itself. According to the invention, on the basis of the result of such comparison, the control unit 28 correspondingly controls the opening of the discharge valve 30.

Appropriately, the speed/flow rate values detected by the sensor 22 are continuously transmitted to the microcontroller of the control unit 28, in which one or more of the aforesaid preset comparison values are stored. More in detail, at a predetermined frequency, which is preferably substantially continuous (i.e. in the order of milliseconds), the microcontroller of the control unit 28 samples the signal detected by the sensor 22 and, by means of a comparator, compares it with the stored comparison values.

So, substantially, the comparator of the control unit 28 is configured to compare, in sequence and at a predetermined frequency, a plurality of values, which are detected by the sensor 22 and representative of the speed/flow rate of the product to be treated in the recirculation circuit 18, with the corresponding comparison value, and to correspondingly control the opening of the discharge valve 30.

In particular, when the comparator of the control unit 28 automatically detects that the value representative of the speed/flow rate detected by the sensor 22 corresponds to a minimum threshold value, the control unit itself automatically controls the total opening of the discharge valve 30 for a time sufficient to complete the complete discharge operation of the filtering module 3. Appropriately, the unfiltered solid fraction (retentate), which accumulated in the filtering element 6, falls and crosses by gravity the discharge pipe 17 and the discharge valve 30, which was appropriately opened, and this without requiring the introduction in backflow of the previously filtered liquid.

Appropriately, the control unit 28 is also electrically connected to a valve 35 associated with the stretch of recirculation circuit 18, which is arranged downstream of the sensor 22 and which is connected to the inlet mouth 11, for introducing pressurized gas in the filtering cylinder 6 intended to create a pressure which pushes the unfiltered solid fraction (retentate) to exit from the cylinder crossing the discharge pipe 17 and the discharge valve 30, which was appropriately opened.

Successively, by venting the air, which was introduced into the filtering cylinder 6 through the valve 37 associated with the circuit 33, the filtering module 3 is filled again through the circuit 18 with new product to be filtered in order to restart a new cycle.

Appropriately, the control unit 28 is also electrically connected to the valve 29 of the washing circuit 31 and is configured to control its opening, and thus the introduction of the washing liquid into the filtering module 3, once the complete and final step of discharging of the solid component which accumulated in the module itself has ended.

The operation of the system clearly derives from that described.

In particular, the product to be treated/prefiltered is introduced by the feeding circuit 24 into the recirculation circuit 18, in which the pump 20 is activated, which introduces the product itself, through the inlet mouth 11, into the cylinder 6 of the filtering module 3.

The introduced product to be treated is pushed, under pressure, against the perforated side wall of the filtering cylinder 6 so that the liquid fraction and the finer solid components, present in it, cross the wall itself and are thus separated from the coarser solid components. At the same time, the part of product (retentate) which flow longitudinally along the filtering cylinder 6 but has not crossed its perforated side wall, exits with greater concentration of solid particles through the outlet mouth 11' and mixes with the new product to be filtered coming from the feeding circuit 24.

More in detail, the filtrate (permeate), i.e. the part of fluid which has crossed through the perforated side wall of the filtering cylinder 6, reaches the inclined bottom 15 of the module 3 and then through the pipe 7 is sent to the successive processing (e.g. to a tangential filtering module or to a centrifugation module) and/or to a collection container.

Gradually, as the filtering process proceeds, the solid particles which in the filtering module 3 are separated from the liquid component and/or from the finer solid particles, are deposited on the perforated side wall of the filtering cylinder 6 and despite being continuously removed by the passage of the revolving blades 12, cause in all cases the gradual obstruction of the filtering module 3.

Substantially, gradually as the filtering process continues, the product to be treated which enters into the recirculation circuit 18 and which comprises both the retentate, which exits from the filtering module 3, and the new product to be treated coming from the feeding circuit 24, becomes denser and denser, because it contains a higher and higher solid fraction of the retentate which has already crossed the filter 3 at least once. So, the fact that the product to be treated, which runs in the recirculation circuit 18, is denser and denser (and thus heavier and heavier) causes a corresponding decrease of the speed/flow rate of the product to be filtered in the circuit itself, which is promptly and appropriately detected by the speed/flow rate sensor 22 placed downstream of the centrifugal pump 20.

When the speed/flow rate detected by the sensor 22 drops under the preset threshold value, this means that a concentration of solids has been reached in the filtration module 3 which is critical and requires a step of discharging; therefore, the control unit 28 deactivates the centrifugal pump 20 and correspondingly and appropriately controls the opening of the discharge valve 30 for the exit, at least in part by gravity, of the unfiltered solid fraction (retentate) present in the cylinder itself.

Preferably, the control unit 28 also controls the opening of the valve 35 for introducing pressurized gas into the filtering cylinder 6, so as to allow the exit of pressure, through the discharge pipe 17 and the passage defined by the open discharge valve 30, of the unfiltered solid fraction (retentate) which is present and which accumulated in the cylinder itself. The introduced pressurized gas is preferably an inert gas, e.g. nitrogen, however, according to the treated product, it could also be compressed air.

So, in this manner, the solid fraction present/accumulated in the filtering module 3 is removed only when a real situation of obstruction of the module itself is approached and/or reached and is controlled automatically on command by the control unit 28, according to the speed/flow rate of the fluid to be treated in the recirculation circuit 18.

As mentioned, for better cleaning of the filtering module 3, the introduction of pressurized gas is advantageously controlled into the filtering cylinder 6, thus creating a pressure which, in combination with falling by gravity, pushes out the unfiltered product (retentate) through the passage defined by the opening of the discharge valve 30.

Once the filtering module 3 has been discharged and cleaned, said module is filled again as rapidly as possible with further filtered product to the stations downstream of the prefiltering device 2.

Appropriately, at the end of work or in particular cases, once the solid fraction which had accumulated in the filtering module 3 is removed, the opening of the valve 29 may also be controlled to allow the washing liquid to enter into the module itself.

Preferably, the method according to the invention, as well as the device which implements such method, are adapted and intended to be used in the food processing sector for filtering organic fluid products, such as for example in the wine making sector for filtering wine.

Furthermore, the invention also relates to a treatment system of liquid organic products in the food processing sector, in which, before the main filtering step/module, preferably of tangential type, a prefiltering device is envisaged according to the present invention, as described above, for separating the finer solid particles from the liquid component, for separating the product to be filtered from the coarser solid components, i.e. those substantially larger than 0.5 mm in size.

From the above, it results that the method and device according to present invention are more advantageous than the traditional methods and devices because:
- they make it possible to reliably determine the concentration level of the solid fraction present in the prefiltering device,
- they make it possible to automate the step of discharging and cleaning of the prefiltering device,
- they avoid interrupting the filtering process to open the discharge valve 30 when there is no actual obstruction/filling of the prefiltering device,
- they make it possible to prevent a situation in which the prefiltering module is completely obstructed and thus more laborious to clean,
- they optimize prefiltering and make it more efficient.

In particular, the present solution differs from GB1535062 and US4436633 because neither envisage automatically controlling the opening of a discharge valve of the solid component, which has accumulated during filtering on the basis of the speed/flow rate values that the speed/flow rate sensor (flow meter) detected in the recirculation circuit.

Furthermore, GB1535062 does not envisage the use in the recirculation circuit of a speed/flow rate sensor (flow meter) because in such circuit only the presence of a pump which is appropriately oversized is envisaged so as to guarantee a high speed of the retentate which is sent back in input to the filtering pipe. Moreover, GB1535062 does not envisage the pump envisaged in the recirculation circuit to be of the centrifuge type nor does it envisage the speed/flow rate sensor to be positioned downstream thereof.

Furthermore, in US4436633, no recirculation circuit is envisaged and the deactivation of the feeding pump is envisaged in order to cause the backwashing by means of filtrate is controlled manually when the solid component about the filtering unit reaches a considerable thickness or when the filtrate production decreased.

Advantageously, instead, according to the present invention, the use in the recirculation circuit of a speed/flow rate sensor arranged downstream of a centrifugal pump makes it possible to obtain an appropriate and reliable detection of the concentration of the solid fraction of the product output from the prefiltering module in simple manner, in order to automatically know the obstruction state of the filtering elements of said module.

## Claims

1. An improved prefiltering method, in particular for prefiltering organic liquid products in the food processing sector, of the type comprising a filtering module (3), in which the product to be treated is radially pushed outwards against the perforated walls of a filtering element (6), so as to separate the filtrate, which is thus collected and extracted through at least one outlet, from the retentate, which is then reintroduced into the filtering module (3) itself by means of a recirculation circuit (18), **characterized in that**:
- the speed/flow rate of the product to be treated is detected by means of a speed/flow rate sensor (22) positioned in the recirculation circuit (18), in which a centrifugal pump (20) for recirculating said product to be treated is also provided, said speed/flow rate sensor (22) being positioned in said recirculation circuit (18) in a position downstream of said centrifugal pump (20),
- the speed/flow rate detected by means of said sensor (22) is compared at predetermined frequency with a predetermined value and, when said predetermined value is reached, said centrifugal pump is deactivated and the opening of a discharge valve (30) is controlled to make the solid fraction of the product to be treated, which accumulated in said filtering element (6) during the prefiltering treatment, exit from said filtering element (6);
wherein a control unit (28) is configured to compare said detected speed/flow rate value with the predetermined value and to correspondingly control, on the basis of said comparison, the opening of the discharge valve (30).

2. A method according to claim 1, **characterized in that** said at least one predetermined comparison value corresponds to a value higher than the speed/flow rate value which represents a limit obstruction situation of the filtering element (6).

3. A method according to one or more of the preceding claims, **characterized in that** said filtering module (3) is arranged vertically and **in that** , by controlling the opening of said discharge valve (30), the solid fraction of the product to be treated, which accumulated in said filtering element (6) during the prefiltering treatment, exits from said module (3), passing through said discharge valve (30), at least in part by gravity.

4. A method according to one or more of the preceding claims, **characterized in that** , when said at least one predetermined speed/flow rate value of the product to be treated is reached, pressurized gas is introduced into the filtering element (6) of said filtering module (3), retentate side, to allow the solid fraction of the product to be treated, which accumulated in said filtering element (6), by effect of the pressurized gas, to exit through the passage defined by the opening of said discharge valve (30).

5. A method according to one or more of the preceding claims, **characterized in that** a washing fluid is introduced into the filtering module (3) after having completed the step of discharging the solid fraction of the product to be treated.

6. An improved prefiltering device, in particular for prefiltering organic fluid products in the food processing sector, **characterized in that** is comprises:
- a filtering module (3) provided with a filtering element (6) with perforated side wall and with means (9, 12) for pushing the product to be treated against the perforated wall, said filtering module (3) being also provided with an inlet (11) of the product to be treated, a retentate outlet (11') and at least one filtrate outlet (7),
- a recirculation circuit (18) of the product to be treated, connecting said retentate outlet (11') to said inlet (11) of the product to be treated,
- a feeding circuit (24) of new product to be treated, leading to said recirculation circuit (18),
- a centrifugal pump (20) and a speed/flow rate sensor (22) inserted in said recirculation circuit (18), said speed/flow rate sensor (22) is inserted in said recirculation circuit (18) in a position downstream of said centrifugal pump (20),
- a control unit (28), connected to said sensor (22) so as to receive the speed/flow rate values of product to be treated, detected by said sensor inside said recirculation circuit (18), said control unit (28) being configured to compare said detected speed/flow rate value with at least one preset value and to correspondingly control, on the basis of said comparison, the opening of a discharge valve (30) to make the solid fraction, which accumulated therein during the prefiltering treatment, exit from the filtering element (6).

7. A device according to claim 6,
**characterized in that** said filtering module (3) has vertical extension and that said discharge valve (30) is provided at the bottom of said filtering element (6).

8. A device according to one or more of claim 6 or claim 7,
**characterized in that** said filtering module (3) comprises, therein, a revolving shaft (9) which supports and moves blades (12) kept in contact with the inner surface of said perforated cylindrical wall of the filtering element (6).

9. A device according to one or more of claims 6-8,
**characterized in that** said control unit (28) is configured to sample the speed/flow rate signal detected by said sensor (22) and to compare, in sequence and at a substantially continuous predetermined frequency in the order of milliseconds, the values obtained from said signal samplings with said predetermined value.

10. A device according to one or more of claims 6-9,
**characterized in that** the discharge valve (30) is of the on-off or proportional type.

11. A device according one or more of claims 6-10,
**characterized in that** it comprises a circuit (29, 31) for sending a washing fluid into said filtering module (3), said control unit (28) being connected to said washing circuit (29, 31) to control its activation.

12. A device according to one or more of claims 6-11,
**characterized in that** it comprises a circuit (35) for introducing pressurized gas into the filtering element (6), retentate side, said control unit (28) being connected to said gas introduction circuit (35) to control its activation.

13. A device according to one or more of claims 6-12,
**characterized in that** said pressurized gas introduction circuit (35) is connected to said filtering element (6) by means of a portion of said recirculation circuit (18) which is downstream of said sensor (22) and which is introduced into said filtering element (6).

14. A system for treating organic fluid products in the food processing sector, **characterized in that** it comprises in sequence:
- a prefiltering device (2) according to one or more of the preceding claims from 6 to 13 for separating, in the product to be treated, the filtrate from the larger solid components having size substantially greater than 0.5 mm,
- a filtering module, preferably of tangential type, for separating, in the filtered product exiting from said prefiltering device (2), the finer solid particles from the liquid component.

## Patentansprüche

1. Ein verbessertes Vorfilterverfahren, insbesondere zum Vorfiltern organischer Flüssigprodukte im Lebensmittelverarbeitungssektor, von der Art, dass eine Filtereinheit (3) vorhanden ist, in der das zu behandelnde Produkt gegen die durchlöcherten Wände eines Filterelements (6) radial nach außen gedrückt wird, sodass das Filtrat, welches dann gesammelt und durch mindestens einen Auslass abgeführt wird, vom Retentat, welches dann mittels eines Rückführungskreislaufs (18) in die Filtereinheit (3) selbst zurückgeführt wird, getrennt wird,
**dadurch gekennzeichnet, dass**
- die Geschwindigkeit/Durchflussrate des zu behandelnden Produkts mittels eines Geschwindigkeits-/Durchflussratensensors (22), der im Rückführungskreislauf (18), in dem auch eine Zentrifugalpumpe (20) zum Zurückführen des zu behandelnden Produkts vorgesehen ist, angeordnet ist, erfasst wird, wobei der Geschwindigkeits-/Durchflussratensensor (22) im Rückführungskreislauf (18) an einer Position stromabwärts von der Zentrifugalpumpe (20) angeordnet ist,
- die mittels des Sensors (22) ermittelte Geschwindigkeit/Durchflussrate mit einer vorbestimmten Frequenz mit einem vorbestimmten Wert verglichen wird und, wenn der vorbestimmte Wert erreicht worden ist, die Zentrifugalpumpe (20) deaktiviert wird sowie die Öffnung eines Austrittsventils (30) gesteuert wird, um den festen Anteil des zu behandelnden Produkts, der sich während der Vorfilteranwendung im Filterelement (6) angesammelt hat, zu veranlassen, aus dem Filterelement (6) auszutreten;
wobei eine Steuerungseinheit (28) ausgebildet ist, den ermittelten Wert der Geschwindigkeit/Durchflussrate mit dem vorbestimmten Wert zu vergleichen und die Öffnung des Austrittsventils (30) dementsprechend auf Grundlage des Vergleichs zu steuern.

2. Ein Verfahren gemäß Anspruch 1, **dadurch gekennzeichnet, dass** der mindestens eine vorbestimmte Vergleichswert einem Wert entspricht, der höher ist als die Geschwindigkeit/Durchflussrate, welche eine Grenzsituation für eine Verstopfung bedeutet.

3. Ein Verfahren gemäß einem oder mehreren der vorstehenden Ansprüche, **dadurch gekennzeichnet, dass** die Filtereinheit (3) vertikal ausgerichtet ist, und dadurch, dass durch Steuern der Öffnung des Austrittsventils (30) der feste Anteil des zu behandelnden Produkts, der sich während der Vorfilteranwendung im Filterelement (6) angesammelt hat, aus der Einheit (3) zumindest teilweise durch die Schwerkraft austritt, indem er durch das Austrittsventil (30) hindurchtritt.

4. Ein Verfahren gemäß einem oder mehreren der vorstehenden Ansprüche, **dadurch gekennzeichnet, dass**, wenn der mindestens eine vorbestimmte Wert der Geschwindigkeit/Durchflussrate des zu behandelnden Produkts erreicht ist, mit Druck beaufschlagtes Gas in das Filterelement (6) der Filtereinheit (3) auf der Retentatseite eingeleitet wird, um es dem festen Anteil des zu behandelnden Produkts, der sich im Filterelement (6) angesammelt hat, zu ermöglichen, durch die Wirkung des mit Druck beaufschlagen Gases durch den von der Öffnung des Austrittsventils (30) gebildeten Durchgang hindurch auszutreten.

5. Ein Verfahren gemäß einem oder mehreren der vorstehenden Ansprüche, **dadurch gekennzeichnet, dass** ein Reinigungsfluid in die Filtereinheit eingebracht wird, nachdem der Schritt des Entfernens des festen Anteil des zu behandelnden Produkts abgeschlossen ist.

6. Eine verbesserte Vorfiltervorrichtung, insbesondere zum Vorfiltern organischer Flüssigprodukte im Lebensmittelverarbeitungssektor, **dadurch gekennzeichnet, dass** sie umfasst:
- eine Filtereinheit (3), ausgestattet mit einem Filterelement (6) mit durchlöcherter Seitenwand und mit Mitteln (9, 12), um das zu behandelnde Produkt gegen die durchlöcherte Wand zu drücken, wobei die Filtereinheit (3) auch mit einem Einlass (11) für das zu behandelnde Produkt, einem Retentatauslass (11') und mindestens einem Filtratauslass (7) ausgestattet ist,
- einen Rückführungskreislauf (18) für das zu behandelnde Produkt, wobei der Rückführungskreislauf (18) den Retentatauslass (11') mit dem Einlass (11) für das zu behandelnde Produkt verbindet,
- einen Zuführungskreislauf (24) für neues zu behandelndes Produkt, welcher zum Rückführungskreislauf (18) führt,
- eine Zentrifugalpumpe (20) und einen Geschwindigkeits-/Durchflussratensensor (22), welche im Rückführungskreislauf (18) angeordnet sind, wobei der Geschwindigkeits-/Durchflussratensensor (22) an einer Position stromabwärts von der Zentrifugalpumpe (20) angeordnet ist,
- eine Steuerungseinheit (28), welche mit dem Sensor (22) verbunden ist, um die vom Sensor im Inneren des Rückführungskreislaufs (18) ermittelten Werte der Geschwindigkeit/Durchflussrate des zu behandelnden Produkts zu empfangen, und welche ausgebildet ist, den ermittelten Wert der Geschwindigkeit/Durchflussrate mit mindestens einem vorbestimmten Wert zu vergleichen und die Öffnung des Austrittsventils (30) dementsprechend auf Grundlage des Vergleichs zu steuern, um den festen Anteil des zu behandelnden Produkts, der sich im Filterelement (6) während der Vorfilterbehandlung angesammelt hat, zu veranlassen, aus dem Filterelement (6) auszutreten.

7. Eine Vorrichtung gemäß Anspruch 6, **dadurch gekennzeichnet, dass** die Filtereinheit (3) eine vertikale Ausdehnung hat, und dass das Austrittsventil (30) am Boden des Filterelements (6) vorgesehen ist.

8. Eine Vorrichtung gemäß einem oder mehreren der Ansprüche 6 und 7, **dadurch gekennzeichnet, dass** die Filtereinheit (3) im Inneren eine drehbare Welle (9) aufweist, welche Klingen (12), die in Kontakt mit der Innenfläche der durchlöcherten zylindrischen Wand des Filterelements (6) gehalten werden, trägt und bewegt.

9. Eine Vorrichtung gemäß einem oder mehreren der Ansprüche 6-8, **dadurch gekennzeichnet, dass** die Steuerungseinheit (28) ausgebildet ist, das vom Sensor (22) erfasste Geschwindigkeits-/Durchflussratensignal abzufragen und die bei den Signalabfragen erhaltenen Werte nacheinander und mit einer im Wesentlichen fortgesetzten vorbestimmten Frequenz in der Größenordnung von Millisekunden mit dem vorbestimmten Wert zu vergleichen.

10. Eine Vorrichtung gemäß einem oder mehreren der Ansprüche 6-9, **dadurch gekennzeichnet, dass** das Austrittsventil (30) von der Art eines Auf/Zu-Ventils oder eines Proportionalventils ist.

11. Eine Vorrichtung gemäß einem oder mehreren der Ansprüche 6-10, **dadurch gekennzeichnet, dass** sie einen Kreislauf (29, 31) zum Einleiten eines Reinigungsfluids in die Filtereinheit (3) umfasst, wobei die Steuerungseinheit (28) mit dem Reinigungskreislauf (29, 31) verbunden ist, um dessen Aktivierung zu steuern.

12. Eine Vorrichtung gemäß einem oder mehreren der Ansprüche 6-11, **dadurch gekennzeichnet, dass** sie einen Kreislauf (35) zum Einleiten eines mit Druck beaufschlagen Gases in das Filterelement (6) auf der Retentatseite umfasst, wobei die Steuerungseinheit (28) mit dem Gaseinleitungskreislauf (35) verbunden ist, um dessen Aktivierung zu steuern.

13. Eine Vorrichtung gemäß einem oder mehreren der Ansprüche 6-12, **dadurch gekennzeichnet, dass** der Kreislauf (35) zum Einleiten des mit Druck beaufschlagen Gases mit dem Filterelement (6) über einen Abschnitt des Rückführungskreislaufs (18), welcher stromabwärts vom Sensor (22) angeordnet und in das Filterelement (6) eingeführt ist, verbunden ist.

14. Ein System für die Behandlung organischer Flüssigprodukte im Lebensmittelverarbeitungsbereich, **dadurch gekennzeichnet, dass** das System hintereinander Folgendes umfasst:
- eine Vorfiltervorrichtung (2) gemäß einem oder mehreren der vorstehenden Ansprüche 6-13 zum Abtrennen des Filtrats von den größeren festen Bestandteilen mit einer Größe im Wesentlichen über 0,5 mm im zu behandelnden Produkt,
- eine Filtereinheit, bevorzugt von der Art einer Tangentialflussfiltereinheit, zum Abtrennen der feineren festen Teilchen vom flüssigen Bestandteil im gefilterten Produkt, das aus der Vorfiltervorrichtung (2) austritt.

## Revendications

1. Procédé de préfiltration améliorée, en particulier pour préfiltrer des produits liquides organiques dans le secteur de la transformation alimentaire, du type comprenant un module de filtration (3), dans lequel le produit à traiter est radialement poussé vers l'extérieur contre les parois perforées d'un élément de filtration (6), afin de séparer le filtrat qui est ainsi collecté et extrait par au moins une sortie, du rétentat, qui est ensuite réintroduit dans le module de filtration (3) lui-même au moyen d'un circuit de recirculation (18), **caractérisé en ce que**:
la vitesse/débit du produit à traiter est détecté(e) au moyen d'un capteur de vitesse/débit (22) positionné dans le circuit de recirculation (18), dans lequel une pompe centrifuge (20) pour faire recirculer ledit produit à traiter est également prévue, ledit capteur de vitesse/débit (22) étant positionné dans ledit circuit de recirculation (18) dans une position en aval de ladite pompe centrifuge (20),
la vitesse/débit détecté(e) au moyen dudit capteur (22) est comparé(e) à une fréquence prédéterminée, avec une valeur prédéterminée et, lorsque ladite valeur prédéterminée est atteinte, ladite pompe centrifuge est désactivée et l'ouverture d'une vanne de décharge (30) est contrôlée pour que la fraction solide du produit à traiter, qui s'est accumulée dans ledit élément de filtration (6) pendant le traitement de préfiltration, sorte dudit élément de filtration (6);
dans lequel une unité de contrôle (28) est configurée pour comparer ladite valeur de vitesse/débit détectée avec la valeur prédéterminée et pour contrôler de manière correspondante, sur la base de ladite comparaison, l'ouverture de la vanne de décharge (30).

2. Procédé selon la revendication 1, **caractérisé en ce que** ladite au moins une valeur de comparaison prédéterminée correspond à une valeur supérieure à la valeur de vitesse/débit qui représente une situation d'obstruction de limite de l'élément de filtration (6).

3. Procédé selon une ou plusieurs des revendications précédentes, **caractérisé en ce que** ledit module de filtration (3) est agencé verticalement et **en ce que**, en contrôlant l'ouverture de ladite vanne de décharge (30), la fraction solide du produit à traiter, qui s'est accumulée dans ledit élément de filtration (6) pendant le traitement de préfiltration, sort dudit module (3), en passant par ladite vanne de décharge (30) au moins partiellement par gravité.

4. Procédé selon une ou plusieurs des revendications précédentes, **caractérisé en ce que**, lorsque ladite au moins une valeur de vitesse/débit prédéterminée du produit à traiter est atteinte, on introduit du gaz sous pression dans l'élément de filtration (6) dudit module de filtration (3), du côté du rétentat, pour permettre à la fraction solide du produit à traiter, qui s'est accumulée dans ledit élément de filtration (6), sous l'effet du gaz sous pression, de sortir par le passage défini par l'ouverture de ladite vanne de décharge (30).

5. Procédé selon une ou plusieurs des revendications précédentes, **caractérisé en ce qu'**un fluide de lavage est introduit dans le module de filtration (3) après avoir terminé l'étape consistant à décharger la fraction solide du produit à traiter.

6. Dispositif de préfiltration améliorée, en particulier pour préfiltrer des produits fluides organiques dans le secteur de la transformation alimentaire, **caractérisé en ce qu'**il comprend:
un module de filtration (3) prévu avec un élément de filtration (6) avec la paroi latérale perforée et avec un moyen (9, 12) pour pousser le produit à traiter contre la paroi perforée, ledit module de filtration (3) étant également prévu avec une entrée (11) du produit à traiter, une sortie de rétentat (11') et au moins une sortie de filtrat (7),
un circuit de recirculation (18) du produit à traiter, raccordant ladite sortie de rétentat (11') à ladite entrée (11) du produit à traiter,
un circuit d'alimentation (24) de nouveau produit à traiter, menant audit circuit de recirculation (18),
une pompe centrifuge (20) et un capteur de vitesse/débit (22) inséré dans ledit circuit de recirculation (18), ledit capteur de vitesse/débit (22) est inséré dans ledit circuit de recirculation (18) dans une position en aval de ladite pompe centrifuge (20),
une unité de contrôle (28) raccordée audit capteur (22) afin de recevoir les valeurs de vitesse/débit du produit à traiter, détectées par ledit capteur à l'intérieur dudit circuit de recirculation (18), ladite unité de contrôle (28) étant configurée pour comparer ladite valeur de vitesse/débit détectée avec au moins une valeur prédéterminée et pour contrôler, de manière correspondante, sur la base de ladite comparaison, l'ouverture d'une vanne de décharge (30) pour que la fraction solide, qui s'est accumulée à l'intérieur pendant le traitement de préfiltration, sorte de l'élément de filtration (6).

7. Dispositif selon la revendication 6, **caractérisé en ce que** ledit module de filtration (3) a une extension verticale et **en ce que** ladite vanne de décharge (30) est prévue au fond dudit élément de filtration (6).

8. Dispositif selon une ou plusieurs des revendications 6 ou 7, **caractérisé en ce que** ledit module de filtration (3) comprend, à l'intérieur de ce dernier, un arbre rotatif (9) qui supporte et déplace des pales (12) maintenues en contact avec la surface interne de ladite paroi cylindrique perforée de l'élément de filtration (6).

9. Dispositif selon une ou plusieurs des revendications 6 à 8, **caractérisé en ce que** ladite unité de contrôle (28) est configurée pour échantillonner le signal de vitesse/débit détecté par ledit capteur (22) et pour comparer, en séquence et à une fréquence prédéterminée sensiblement continue de l'ordre des millisecondes, les valeurs obtenues desdits échantillons de signal avec ladite valeur prédéterminée.

10. Dispositif selon une ou plusieurs des revendications 6 à 9, **caractérisé en ce que** la vanne de décharge (30) est du type marche-arrêt ou proportionnel.

11. Dispositif selon une ou plusieurs des revendications 6 à 10, **caractérisé en ce qu'**il comprend un circuit (29, 31) pour envoyer un fluide de lavage dans ledit module de filtration (3), ladite unité de contrôle (28) étant raccordée audit circuit de lavage (29, 31) pour contrôler son activation.

12. Dispositif selon une ou plusieurs des revendications 6 à 11, **caractérisé en ce qu'**il comprend un circuit (35) pour introduire du gaz sous pression dans l'élément de filtration (6), du côté du rétentat, ladite unité de contrôle (28) étant raccordée audit circuit d'introduction de gaz (35) pour contrôler son activation.

13. Dispositif selon une ou plusieurs des revendications 6 à 12, **caractérisé en ce que** ledit circuit d'introduction de gaz sous pression (35) est raccordé audit élément de filtration (6) au moyen d'une partie dudit circuit de recirculation (18) qui est en aval dudit capteur (22) et qui est introduite dans ledit élément de filtration (6).

14. Système pour traiter des produits fluides organiques dans le secteur de la transformation alimentaire, **caractérisé en ce qu'**il comprend en séquence :
un dispositif de préfiltration (2) selon une ou plusieurs des revendications 6 à 13 pour séparer, dans le produit à traiter, le filtrat des composants solides plus gros ayant une taille sensiblement supérieure à 0,5 mm,
un module de filtration, de préférence de type tangentiel, pour séparer, dans le produit filtré sortant dudit dispositif de préfiltration (2), les particules solides plus fines du composant liquide.
